# EUROPEAN PATENT APPLICATION

(11) **EP 1 897 759 A1**
(43) Date of publication of application: **12.03.2008**
(21) Application number: 05745536.2
(22) Date of filing: 29.04.2005
(51) Int. Cl.: B60R 19/18

(54) **BUMPER CROSS-MEMBER AND PRODUCTION METHOD THEREOF**

(71) Applicant: Autotech Engineering, A.I.E., 48220 Abadiño (Vizcaya) (ES)
(72) Inventor: PERARNAU RAMOS, Francesc, E-08028 Sabadell (Barcelona) (ES); PEIDRÓ APARICI, Julio, E-08025 Barcelona (ES); RUIZ, Julian, 48220 Abadiano (Vizcaya) (ES); BECARES, Antonio, 08251 Santpedor (Barcelona) (ES)
(74) Representative: Gislon, Gabriele
(86) International application number: PCT/ES2005/000229
(87) International publication number: WO 2006/117411

(57) **Abstract**

The invention relates to a bumper cross-member and to a method for manufacturing same. The bumper cross-member is applicable to a vehicle and comprises a tubular body (10) having a constant cross-section obtained from steel sheet shaped by roll-forming, with contiguous longitudinal edges joined by welding. The body (10) has a front and rear walls (11, 12) connected by upper and lower walls (13, 14). It includes deformation configurations adapted to facilitate deformation of the upper and lower walls (13, 14) in the event of impact. To that end, each of the upper and lower walls (13, 14) comprises two wall sections (13a, 13b; and 14a, 14b) extending in an inclined manner at opposite angles from the front wall (11) and from the rear wall (12), respectively, and converging in a longitudinal mid bending line (15, 16) located between the front and rear walls (11, 12).

## Description

### Field of the art

The present invention relates to a bumper cross-member applicable to a vehicle. The bumper cross-member of the present invention has the shape of an elongated body having a substantially constant closed cross-section with configurations to determine an up to a certain point controlled deformation thereof in the event of impact. The present invention also relates to a method for manufacturing such bumper cross member.

### State of the prior art

It is common for many vehicles to incorporate front and/or rear bumpers made of plastic with an inner metal reinforcing cross-member. Different bumper cross-member designs are known in the shape of a substantially hollow elongated body with an open or closed cross-section. A closed cross-section generally provides greater stiffness to the elongated body than an open cross-section does. Bumper cross-members are generally joined to the structure of the vehicle by means of impact absorbers, which are designed to deform in the event of impact absorbing the greatest possible amount of energy. Deformation of the actual bumper cross-member provides additional energy absorption which, in the events of low intensity impacts (i.e. at low speed), can be enough to prevent damage to the impact absorbers and to other elements of the structure of the vehicle. In any case, there are standard tests in many countries, such as, for example, the reparability test, the pole crash test, the off-centered or centered pendulum impact test and/or the tow hook tests which a bumper cross-member for a vehicle must pass in order to be validated.

US patent No. 6,227,582 describes a bumper cross-member made of extruded aluminum having a front wall, a rear wall and a plurality of connecting walls extending between said front and rear walls. The mentioned connecting walls are less thick in their middle areas than at their ends connected to the front and rear walls, and are provided so as to yield, becoming deformed in the less thick areas, in the event of impact. The drawback of this bumper cross-member is the relatively low resistance of aluminum in comparison with steel, which makes it necessary to provide considerable thicknesses to obtain a bumper cross-member that is sufficiently resistant to pass the various standard tests. The extrusion processes further provide rectilinear profiles and this document neither describes nor suggests a subsequent shaping of the bumper cross-member so as to give it a longitudinally arched shape.

Patent FR-A-2741413 describes a bumper cross-member made of extruded aluminum having a combination of two different absorption areas: a first soft absorption area, located in the front part; and a hard absorption area, located in the rear part. In one embodiment, the soft absorption area has upper and lower walls forming an inward bend so as to facilitate an elastic deformation in low intensity collisions (i.e. at low speed). This construction has the same drawbacks of the preceding document in relation to extruded aluminum.

US patent 6,209,934 discloses a bumper cross-member which, in one embodiment, comprises a tubular body formed by roll-forming from a strip of high resistance metal sheet, with contiguous longitudinal edges of the strip joined by welding. The cross-member has front and rear walls connected by upper and lower walls. The connections of the upper and lower walls with the front and rear walls are carried out through radiuses of connection that are larger than the minimum radius allowed by the art of roll-forming to facilitate their deformation in the event of impact. This construction has the drawback that the upper and lower walls are flat and perpendicular to the front and rear walls, and therefore, in the event of impact, a deformation of the radiuses of connection is not enough to absorb a significant amount of energy, but plastic deformation of the actual upper and lower walls is necessary.

US patent 5,080,410 discloses a bumper cross-member comprising a tubular body having a constant cross-section and an arched longitudinal configuration obtained by roll-forming of a very high resistance steel sheet. The tubular body has front and rear walls and upper and lower walls connecting same. The upper and lower walls have inclined portions for the purpose of facilitating their deformation under compression during the arching operation of the tubular body to prevent excessive stretching of the outer wall. Nevertheless, this document neither describes nor suggests that the mentioned inclined portions of the upper and lower walls provide up to a certain point controlled deformation of the bumper cross-member in the event of impact.

Patent JP-A-9141329 (equivalent to US 5,829,666) discloses a method for manufacturing a reinforcing bumper cross-member in the shape of a curved tubular body, having a closed cross-section, with a rear wall formed with an inwardly recessed channel and a front wall formed in parallel with the rear wall and welded to the recessed area of the rear wall. The method comprises shaping a strip of high resistance steel sheet by roll-forming in order to form said tubular body; welding contiguous longitudinal edges of said strip of steel sheet together and to the rear part of said recessed area; arching the tubular body according to a predetermined radius once the welding is carried out; and finally successively cutting the arched tubular body according to a predetermined length to provide a series of bumper cross-members. The drawback of this method is that it provides a single, constant radius for the longitudinally arched shape of the cross-member, and it neither describes nor suggests how to provide other additional radiuses in local areas thereof.

One object of the present invention is to contribute to overcoming the aforementioned and other drawbacks, providing a bumper cross-member applicable to a vehicle, made of steel sheet, which can be obtained by roll-forming, and provided with configurations which aid in up to a certain point controlled deformation thereof in the event of impact. Another object of the present invention is to provide a method for manufacturing such bumper cross-member.

### Disclosure of the invention

According to a first aspect, the present invention provides a bumper cross-member applicable to a vehicle, of the type comprising a tubular cross-member body having a constant cross-section obtained from steel sheet formed by roll-forming and with contiguous longitudinal edges joined by welding, said tubular cross-member body having a front wall, a rear wall, and upper and lower walls connecting said front and rear walls, and deformation configurations adapted to facilitate deformation of the upper and lower walls in the event of impact. The bumper cross-member according to the present invention is characterized in that said deformation configurations comprise, for each of the upper and lower walls, two wall sections extending in an inclined manner at opposite angles from the front wall and from the rear wall, respectively, and converging into a longitudinal mid bending line located between the front and rear walls.

The connections between the two inclined sections of the upper wall and of the lower wall are preferably carried out through respective radiuses of connection forming the respective mid bending lines. In a similar manner, the connections of each of the two wall sections of the upper and lower walls to the corresponding front wall and rear wall are carried out through radiuses of connection forming respective end bending lines. The two wall sections of each of the upper and lower walls are substantially flat and the mid bending lines are located more inwardly of the cross-member body than said end bending lines, although it is also within the scope of the present invention to form the cross-member body with the mid bending lines located more outwardly than the end bending lines.

With this construction, in the cross-member body there are no flat walls arranged parallel to the most probable direction of the force of a possible impact, which is the direction that is generally perpendicular to the front and rear walls of the cross-member body. In other words, a possible impact of the most probable type will exert a force on the outer wall of the cross-member body which tends to deform it in the direction of approaching the inner wall. The inclined positions of the two wall sections of each of the upper and lower walls connecting the outer wall with the inner wall, in combination with the mentioned radiuses of connection, define up to a certain point controlled deformation of the bumper cross-member that can absorb part of the energy from the impact. In very low intensity impacts (i.e. at very low speed), such as those occurring in parking maneuvers for example, such deformation is elastic deformation that does not cause permanent deformation in the bumper cross-member. In low intensity impacts (i.e. at low speed), the deformation is plastic and elastic, leaving a permanent deformation in the bumper cross-member, but the absorbed energy can be enough to prevent damages to the impact absorbers on which the cross-member is assembled, or to other structural parts of the vehicle. In high and very high intensity impacts (i.e. at a high and very high speed), the plastic and elastic deformation of the bumper cross-member provides a valuable absorption of energy which is added to the energy absorbed by the impact absorbers.

The ability of the bumper cross-member to absorb energy by deformation can be determined for each application depending on the angles of inclination of the sections of the upper and lower walls and on the radiuses of connection of the walls. Furthermore, the fact of having a closed cross-section profile provides the bumper cross-member with stiffness and a moment of inertia that can pass the different standard tests with moderate weight. The bumper cross-member of the present invention likewise allows fixing a tow hook with a double anchor, in the front wall and in the rear wall of the cross-member body, given that same are mutually opposing. The front and rear walls of the bumper cross-member of the present invention can furthermore be completely smooth, i.e. without reinforcing ribs or grooves, which can be advantageous for using them as a supporting and fixing base for other elements of the vehicle, such as plastic or foam parts associated to the bumper of the vehicle for example, or to incorporate openings, such as one or more openings for a parking sensor for example.

According to a second aspect, the present invention provides a method for manufacturing a bumper cross-member applicable to a vehicle, the method being of the type which comprises shaping by roll-forming a strip of steel sheet until having longitudinal edges thereof mutually contiguous to form a profile having a constant cross-section, with a front wall, a rear wall, and upper and lower walls connecting said front and rear walls; joining said contiguous longitudinal edges of said strip of steel sheet by welding to form a tubular body; and cutting the tubular body successively to a predetermined length to provide a series of bumper cross-member bodies. The method of the present invention is characterized in that the step of shaping said strip of steel sheet comprises forming deformation configurations adapted to facilitate deformation of the upper and lower walls in the event of impact, shaping for each of the upper and lower walls, two wall sections extending in an inclined manner at opposite angles from the front wall and from the rear wall, respectively, and converging in a corresponding longitudinal mid bending line located between the front and rear walls.

The method of the present invention is suitable for manufacturing the bumper cross-member according to the first aspect of the present invention as described above.

The joining of the longitudinal edges of the strip of steel sheet by welding is carried out continuously by means of a welding apparatus placed at the outlet of a roll-forming apparatus shaping the constant cross-section profile, and before a cutting apparatus cuts the tubular body into sections corresponding to the length of a bumper cross-member. The welding is carried out either joining mutually attached flanges formed next to said longitudinal edges by welding, or joining said longitudinal edges by butt-joint welding. The welding technique used can be chosen, depending on each variant or application, from a group including Nd: YAG or CO₂ laser welding, both having a continuous or intermittent seam, deposition welding, plasma welding, high-frequency welding, and electric resistance and pressure welding.

The method advantageously comprises longitudinally arching the tubular body according to a first radius during the roll-forming process, before the step of cutting the tubular body into sections corresponding to the length of a bumper cross-member. After the cutting step, the method optionally comprises additionally arching end regions of each cut section, i.e. of each cross-member body, according to a second radius, smaller than the mentioned first radius, using to that end a roller bending apparatus. This allows obtaining a series of bumper cross-members, each with an arched longitudinal configuration having the first radius in a central region and said second radius in the end regions. The shaping of said additional radiuses comprises introducing a resistant core inside the end regions of the cross-member body to be arched so as to prevent crushing them during the additional arching operation in the bending apparatus. Subsequent additional radiuses could also evidently be formed in other regions of the bumper cross-member with this technique. The mentioned resistant core can be one of any of the types known in the art of the field, included a reusable flexible tool or a disposable deformable tool for example.

### Brief description of the drawings

The aforementioned and other advantages and features will be better understood from the following detailed description of several exemplary embodiments with reference to the attached drawings, in which:
Figure 1 is a plan view of a bumper cross-member according to an embodiment of the present invention;
Figure 2 is a schematic depiction of a first phase of a method according to the present invention for manufacturing the bumper cross-member of Figure 1;
Figure 3 is a schematic depiction of a second phase of the method according to the present invention for manufacturing the bumper cross-member of Figure 1; and
Figures 4 to 9 are cross-sectional views taken along plane IV-IV of Figure 1 illustrating different alternative configurations for the bumper cross-member.

### Detailed description of exemplary embodiments

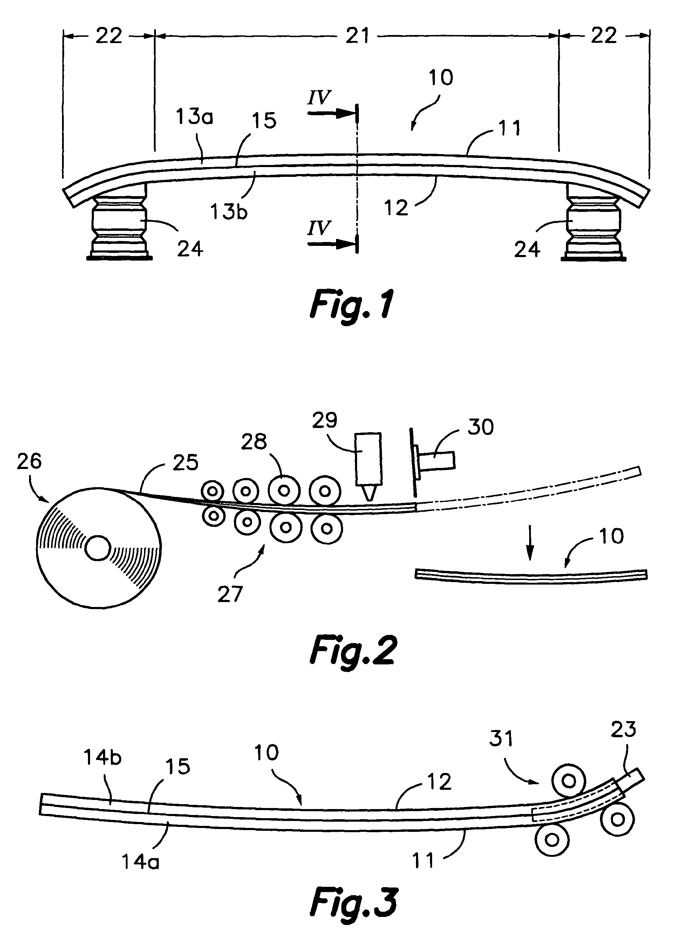

First in reference to Figure 1, reference numeral 10 generally indicates a cross-member body 10 forming the bumper cross-member of the present invention. The cross-member body 10 is tubular having a constant cross-section, and is obtained from steel sheet shaped by roll-forming and with contiguous longitudinal edges joined by welding. According to the embodiment shown in Figure 1, the cross-member body 10 has an arched longitudinal configuration, with a first radius in a central region 21 and a second radius, smaller than the first radius, in end regions 22. The cross-member body 10 has a front wall 11, a rear wall 12, to which impact absorbers 24 provided for being joined to the structure of a vehicle are fixed.

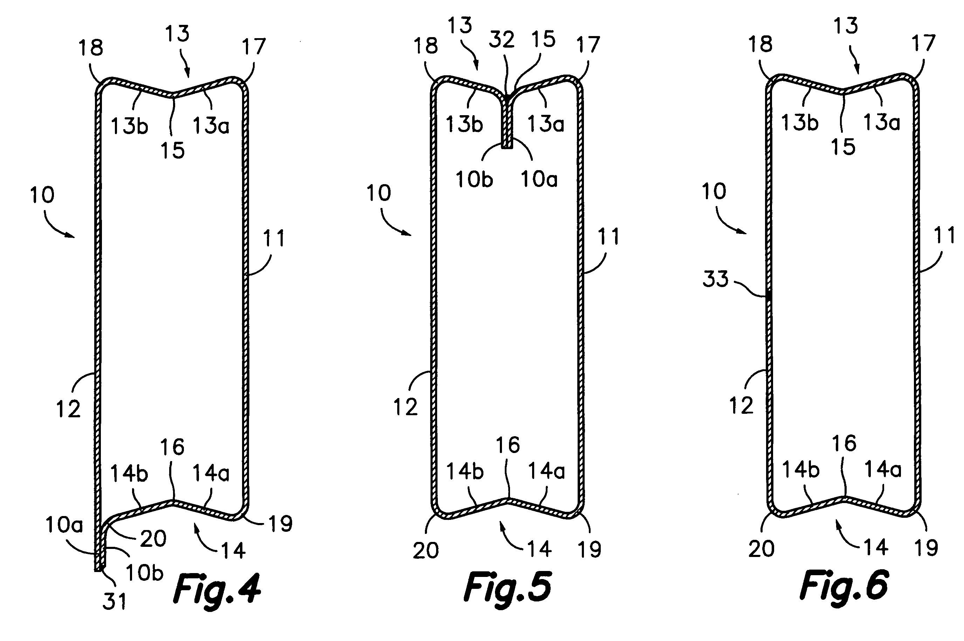

As best shown in Figures 4 to 9, the front and rear walls 11, 12 of the cross-member body 10 are connected together by upper and lower walls 13, 14, and the cross-member body 10 includes deformation configurations adapted to facilitate up to a certain point controlled deformation of the upper and lower walls 13, 14 in the event of impact. These deformation configurations comprise, for each of the upper and lower walls 13, 14, two substantially flat wall sections 13a, 13b; and 14a, 14b extending in an inclined manner at opposite angles from the front wall 11 and from the rear wall 12, respectively, and converging in a longitudinal mid bending line 15 and 16 located between the front and rear walls 11, 12. The mentioned two front and rear wall sections 13a, 13b of the upper wall 13 and the two front and rear wall sections 14a, 14b of the lower wall 14 are joined together through respective radiuses of connection forming said mid bending lines 15 and 16. The front wall sections 13a, 14a of the upper and lower walls 13, 14 are joined to the front wall 11 through respective radiuses of connection forming front end bending lines 17, 19. In a similar manner, the rear wall sections 13b 14b of each of the upper and lower walls 13, 14 are joined to the rear wall 12 through respective radiuses of connection forming rear end bending lines 18, 20.

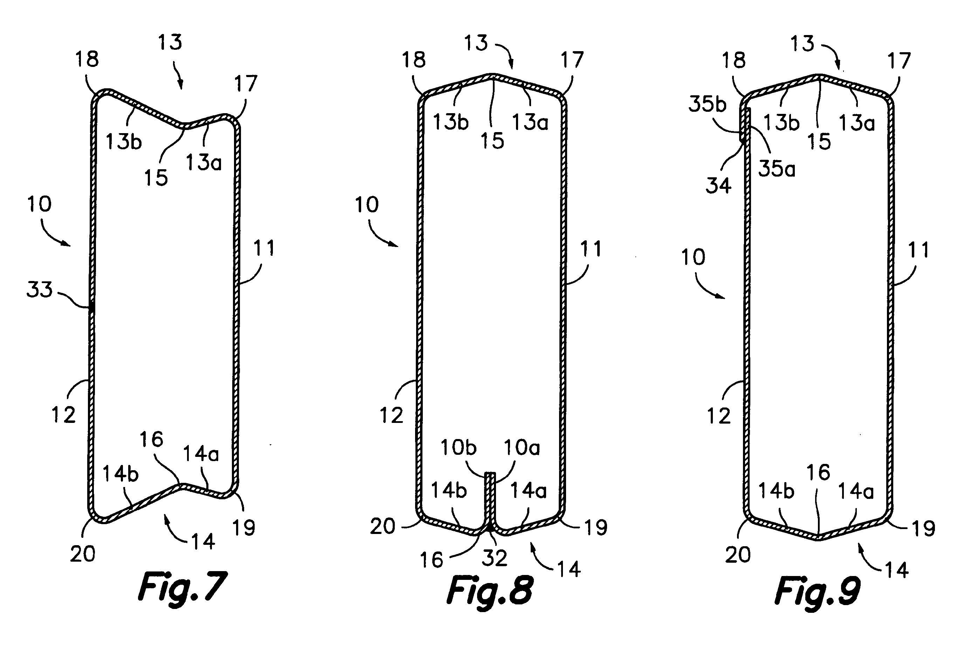

The radiuses of connection forming the mentioned bending lines 15-20 are generally larger than the minimum radius necessary for bending the strip of steel sheet in a roll-forming apparatus used for the shaping thereof. In the different embodiments shown in Figures 4 to 7, the mid bending lines 15 and 16 are located more inwardly of the cross-member body 10 than said end bending lines 17, 18, 19, 20, whereas in the embodiments shown in Figures 8 and 9, the mid bending lines 15 and 16 are located more outwardly of the cross-member body 10 than the end bending lines 17, 18, 19, 20.

The inclined positions of the wall sections 13a, 13b and 14a, 14b of the upper and lower walls 13, 14, in combination with the radiuses of connection forming the bending lines 15-20, facilitate controlled deformation, up to a certain point, of the cross-member body 10 when, for example, the front wall 11 thereof receives an impact. In any case, deformation of the wall sections 13a, 13b and 14a, 14b of the upper and lower walls 13, 14 and of their radiuses of connection absorbs a considerable amount of energy from the impact which is added to the energy absorbed by the impact absorbers 24.

In the embodiment of Figure 4, the steel sheet from which the cross-member body 10 is formed has contiguous longitudinal edges next to which mutually attached flanges 10a, 10b are formed and joined by a welded joint 31. One of said flanges 10a extends outwardly of the cross-member body 10 from one end of the corresponding rear wall 12 whereas the other one of said flanges 10b extends outwardly of the cross-member body 10 from a contiguous end of the corresponding rear wall section 14b of the corresponding lower wall 14. The flange 10a extending from the rear wall 12 is coplanar therewith, whereas the flange 10b extending from the rear wall section 14b of the lower wall 14 forms an angle therewith through a radius of connection forming the corresponding end bending line 20. It will be understood that even though the two mentioned flanges 10a, 10b are located next to the rear lower corner of the cross-section profile of the cross-member body 10 in Figure 4, said flanges could be located similarly in any of the other three corners with an equivalent result. The flange 10a extending from the rear wall 12 could alternatively not be coplanar therewith.

Figure 5 shows another embodiment in which the steel sheet from which the cross-member body 10 is formed also has mutually attached flanges 10a, 10b formed next to its contiguous longitudinal edges and joined by a welded joint 32. However, the two flanges 10a, 10b here extend inwardly of the cross-member body 10 from contiguous ends of the front and rear wall sections 13a, 13b of the upper wall 13, respectively. Each of these flanges 10a, 10b forms an angle with its corresponding front and rear wall section 13a, 13b through a respective radius of connection, and both radiuses of connection together are the corresponding mid bending line 15. Even though the two flanges are shown located next to the mid bending line 15 of the upper wall 13 in the embodiment of Figure 5, such flanges could be located next to the mid bending line 16 of the lower wall 14, or in any other area of any of the front and rear walls 11, 12 with an equivalent result.

The contiguous longitudinal edges of the steel sheet forming the cross-member body 10 are alternatively joined by butt welding. In the embodiment shown in Figure 6, a butt weld joint 33 of the contiguous longitudinal edges of the steel sheet is located in a central area of the rear wall 12, although it could be located in any other area thereof or of any of the other front, upper and lower walls 11, 13, 14 with an equivalent result.

Figure 7 shows an additional embodiment which is entirely similar to the embodiment described above in relation to Figure 6 except in that the front sections 13a, 14a of the upper and lower walls 13, 14 are of lengths and/or inclinations different from those of the rear sections 13b, 14b of the upper and lower walls 13, 14. Accordingly, the cross-section profile of the cross-member body 10 is not symmetrical in relation to a line passing through the mid bending lines 15, 16, as occurs in the embodiments shown in Figures 4-6. In Figure 7, the front wall 11 is shorter than the rear wall 12, although the arrangement could be the opposite, or even the two front and rear walls 11, 12 could be of the same length despite the asymmetry of the upper and lower walls 12, 14.

Figure 8 shows an embodiment that is very similar to the one described above in relation to Figure 5, the difference in this case being that the mid bending lines 15, 16 are located more outwardly of the cross-member body 10 than the end bending lines 17-20. It is evident that even though the mutually attached flanges 10a, 10b are shown next to the mid bending line 16 of the lower wall 14, such flanges could be located next to the mid bending line 15 of the upper wall 13, or in any other area of any of the walls 11-12 with an equivalent result in this case as well.

Figure 9 shows an embodiment that is similar to the one described above in relation to Figure 8 concerning its general configuration but it is different in relation to the welded joint of the contiguous edges of the steel sheet from which the cross-member body 10 is formed. In this case bands 35a, 35b of the metal sheet, respectively adjacent to the mentioned contiguous edges, are mutually overlaid and joined by a welded joint 34.

It must be indicated that combinations of the embodiments described above in relation to Figures 4 to 9, as well as variations thereof that would normally occur to one skilled in the art, are considered as being within the scope of the present invention.

A method for manufacturing a bumper cross-member according to the present invention is described below in relation to Figures 2 and 3. The method comprises shaping by roll-forming a continuous strip of steel sheet 25, for example coming from a reel 26, by means of a roll-forming apparatus 27 provided with a plurality of rollers 28 adapted to gradually bend the strip of steel sheet 25 transversal to the forward movement direction until arranging longitudinal edges thereof in a mutually contiguous arrangement, forming a profile having a constant cross-section. The method then comprises joining said contiguous longitudinal edges of the strip of steel sheet 25 by welding using a welding apparatus 29 to form a tubular body 50. The welding operation is carried out continuously at the outlet of the roll-forming apparatus 27. The method then comprises successively cutting the tubular body 50 by means of a cutting apparatus 30 to a predetermined length so as to provide a series of cross-member bodies 10, each of which has a front wall 11, a rear wall 12, and upper and lower walls 13, 14 connecting said front and rear walls 11, 12, as described above in relation to Figures 4 to 9. The method optionally comprises stamping openings in the strip of steel sheet 25 by means of a stamping apparatus (not shown) before the strip of steel sheet 25 enters said roll-forming apparatus 27.

The shaping operation evidently includes shaping the aforementioned deformation configurations adapted to facilitate deformation of the upper and lower walls 13, 14 in the event of impact, so they include the corresponding wall portions 13a, 13b; 14a, 14b and the radiuses of connection forming the bending lines 15-20. The method contemplates shaping the strip of metal sheet 25 so as to place flanges 10a, 10b or bands 35a, 35b adjacent to the contiguous edges thereof attached to one another, or to place the contiguous edges of the strip of metal sheet 25 mutually opposite to one another in a butt arrangement. Different welding techniques can be used for making the welding joint of the contiguous edges of the strip of steel sheet 25 depending on the configuration of the cross-section profile of the tubular body 30 and on the application. For example, when mutually attached flanges 10a, 10b extending inwardly of the tubular body 50 have been shaped as shown in Figures 5 and 8, or mutually attached bands 35a, 35b as shown in Figure 9, a suitable technique for welding said flanges 10a, 10b or bands 15a, 15b is an Nd: YAG or CO₂ laser weld, both having a continuous or intermittent seam, or a deposition weld. When the flanges 10a, 10b have been shaped such that they extend outwardly of the tubular body 50, like in the embodiment shown in Figure 4, the flanges 10a, 10b can also be joined together by means of an Nd: YAG or CO₂ laser welding technique, both having a continuous or intermittent seam, or deposition welding. When flanges have not been formed but the strip of steel sheet has been shaped to place its contiguous longitudinal edges in a butt arrangement, the welding technique selected to join said longitudinal edges in a butt joint can be selected, for example, from laser welding; plasma welding; high-frequency welding, among others.

As shown in Figure 2, the method of the invention comprises longitudinally arching the tubular body 50 according to a first radius before the cutting step by means of the cutting apparatus 30. To that end, the rollers 28 of the roll-forming apparatus 17 are arranged such that the tubular body 50 comes out of the roll-forming apparatus arched in a constant manner with said first radius. Alternatively or complementarily, arranged between the welding apparatus 29 and the cutting apparatus 30 there is a bending apparatus (not shown) adapted to arch, or to finish arching, the tubular body 50 according to the constant first radius. Once they are cut, the cross-member bodies 10 maintain this arched configuration according to said first radius. As shown in Figure 3, the method of the present invention optionally comprises additionally arching end regions 22 (Figure 1) of each cross-member body 10 according to a second radius by means of a roller bending apparatus 31. The method comprises introducing a resistant core 23, such as a flexible tool, inside each end region 22 during the additional arching operation to prevent them from being crushed. As an alternative, the arching of the second radius can be carried out using another type of mechanical device, a press (not shown) for example, instead of the roller bending apparatus 31.

According to the embodiments shown, the second radius is smaller than the first radius and is used to optimize the adaptation of the bumper cross-member to the front or rear plastic bumper of a vehicle for which the bumper cross-member has been designed. Evidently, using the additional arching technique described above, only one region of the cross-member body 10, or more than two regions with equal or different radiuses could be additionally arched, or the additionally arched regions could not be located at the ends of the cross-member body 10, or the second additional arching radius could be larger than the first one, etc.

A person skilled in the art will be able to introduce variations and modifications in the embodiments shown and described without departing from the scope of the present invention as defined in the attached claims.

## Claims

1. A bumper cross-member applicable to a vehicle, of the type comprising a tubular cross-member body (10) having a constant cross-section obtained from steel sheet formed by roll-forming and with contiguous longitudinal edges joined by welding, said cross-member body (10) having a front wall (11), a rear wall (12), and upper and lower walls (13, 14) connecting said front and rear walls (11, 12), and deformation configurations adapted to facilitate deformation of the upper and lower walls (13, 14) in the event of impact, **characterized in that** said deformation configurations comprise, for each of the upper and lower walls (13, 14), two wall sections (13a, 13b; and 14a, 14b) extending in an inclined manner at opposite angles from the front wall (11) and from the rear wall (12), respectively, and converging in a longitudinal mid bending line (15) and (16) located between the front and rear walls (11, 12).

2. A cross-member according to claim 1, **characterized in that** said two wall sections (13a, 13b; and 14a, 14b) of each of the upper and lower walls (13, 14) are joined together through a radius of connection forming said mid bending line (15) and (16).

3. A cross-member according to claim 2, **characterized in that** said two wall sections (13a, 13b; and 14a, 14b) of each of the upper and lower walls (13, 14) are joined to the front wall (11) and to the rear wall (12), respectively, through radiuses of connection forming end bending lines (17, 18; and 19, 20).

4. A cross-member according to claim 2 or 3, **characterized in that** said two wall sections (13a, 13b; and 14a, 14b) of each of the upper and lower walls (13, 14) are substantially flat.

5. A cross-member according to claim 3, **characterized in that** the mid bending lines (15) and (16) are located more inwardly of the cross-member body (10) than said end bending lines (17, 18; and 19, 20).

6. A cross-member according to claim 3, **characterized in that** the mid bending lines (15) and (16) are located more outwardly of the cross-member body (10) than said end bending lines (17, 18; and 19, 20).

7. A cross-member according to claim 4, **characterized in that** said steel sheet from which is shaped the cross-member body (10) comprises flanges formed respectively adjacent to said contiguous longitudinal edges of the steel sheet, said flanges being mutually attached and joined by a welded joint (31, 32).

8. A cross-member according to claim 7, **characterized in that** said flanges extend outwardly of the cross-member body (10).

9. A cross-member according to claim 7, **characterized in that** said flanges extend inwardly of the cross-member body (10).

10. A cross-member according to claim 8 or 9, **characterized in that** at least one of the flanges forms an angle with that wall (11, 12) or wall section (13a, 13b; and 14a, 14b) from which it extends, and is joined thereto through a radius of connection forming one of said bending lines (16-20).

11. A cross-member according to claim 4, **characterized in that** said steel sheet from which is shaped the cross-member body (10) comprises bands (35a, 35b) formed respectively adjacent to said contiguous longitudinal edges of the steel sheet, said bands (35a, 35b) being mutually attached and joined by a welded joint (34).

12. A cross-member according to claim 4, **characterized in that** said contiguous longitudinal edges joined by welding of said steel sheet are butt joined by a welded butt-joint (33).

13. A cross-member according to any one of the previous claims, **characterized in that** the cross-member body (10) has an arched longitudinal configuration.

14. A cross-member according to any one of claims 1 to 12, **characterized in that** the cross-member body (10) has an arched longitudinal configuration with a first radius in a central region (21) of the cross-member body (10) and a second radius, smaller than the first radius, in end regions (22) of the cross-member body (10).

15. A method for manufacturing a bumper cross-member applicable to a vehicle, of the type which comprises shaping by roll-forming a strip of steel sheet until having longitudinal edges thereof mutually contiguous to form a profile having a constant cross-section, with a front wall (11), a rear wall (12), and upper and lower walls (13, 14) connecting said front and rear walls (11, 12); joining said contiguous longitudinal edges of said strip of steel sheet by welding to form a tubular body (50); and cutting the tubular body (50) successively to a predetermined length to provide a series of bumper cross-member bodies, **characterized in that** the step of shaping said strip of steel sheet comprises forming deformation configurations adapted to facilitate deformation of the upper and lower walls (13, 14) in the event of impact, shaping for each of the upper and lower walls (13, 14), two wall sections (13a, 13b; and 14a, 14b) extending in an inclined manner at opposite angles from the front wall (11) and from the rear wall (12), respectively, and converging in a corresponding longitudinal mid bending line (15) and (16) located between the front and rear walls (11, 12).

16. A method according to claim 15, **characterized in that** it comprises to shape a radius of connection connecting said two wall sections (13a, 13b; and 14a, 14b) of any of the upper and lower walls (13, 14), said radius of connection forming said mid bending line (15) and (16).

17. A method according to claim 16, **characterized in that** it comprises to shape radiuses of connection connecting said two wall sections (13a, 13b; and 14a, 14b) of any of the upper and lower walls (13, 14) with the front wall (11) and the rear wall (12), respectively, said radiuses of connection forming end bending lines (17, 18; and 19, 20).

18. A method according to claim 17, **characterized in that** it comprises to shape said two wall sections (13a, 13b; and 14a, 14b) of any of the upper and lower walls (13, 14) with a substantially flat configuration.

19. A method according to claim 17, **characterized in that** it comprises to shape the strip of steel sheet so as to locate the mid bending lines (15) and (16) more inwardly of the cross-member body (10) than said end bending lines (17, 18; and 19, 20).

20. A method according to claim 17, **characterized in that** it comprises to shape the strip of steel sheet so as to locate the mid bending lines (15) and (16) more outwardly of the cross-member body (10) than said end bending lines (17, 18; and 19, 20).

21. A method according to claim 17, **characterized in that** it comprises to shape flanges adjacent to said longitudinal edges of the strip of steel sheet, to mutually attach said flanges and to join them by welding.

22. A method according to claim 21, **characterized in that** it comprises to shape said flanges extending outwardly of the tubular body (50), and to join them by Nd: YAG or CO₂ laser welding, both having a continuous or intermittent seam, or by deposition welding, or electric resistance and pressure welding.

23. A method according to claim 21, **characterized in that** it comprises to shape said flanges extending inwardly of the tubular body (50), and to join them by Nd: YAG or CO₂ laser welding, both having a continuous or intermittent seam, or by deposition welding.

24. A method according to claim 17, **characterized in that** it comprises to shape the strip of steel sheet so as to locate said contiguous longitudinal edges in a butt arrangement and to join them by a welding technique selected from the group comprising: laser welding; plasma welding; and high frequency welding.

25. A method according to claim 17, **characterized in that** it comprises to shape the strip of steel sheet so as to locate bands (35a, 35b) respectively adjacent to said contiguous longitudinal edges mutually attached, and join them by Nd: YAG or CO₂ laser welding, both having a continuous or intermittent seam, or by deposition welding.

26. A method according to any one of claims 15 to 25, **characterized in that** it comprises longitudinally arching the tubular body (50) according to a first radius before de step of cutting.

27. A method according to any one of claims 15 to 25, **characterized in that** it comprises longitudinally arching the tubular body (50) according to a first radius before de step of cutting, and additionally arching at least a region (22) of each bumper cross-member according to a second radius after de step of cutting.

28. A method according to any one of claims 15 to 25, **characterized in that** it comprises longitudinally arching the tubular body (50) according to a first radius before de step of cutting, and additionally arching at least a region (22) of each bumper cross-member according to a second radius after de step of cutting, introducing a resistant core (23) inside said region (22) during the additional arching operation to prevent it from being crushed.
